# EUROPÄISCHE PATENTSCHRIFT

(11) **EP 4 060 868 B1**
(45) Veröffentlichungstag und Bekanntmachung des Hinweises auf die Patenterteilung: **24.12.2025**
(21) Anmeldenummer: 22158161.4
(22) Anmeldetag: 23.02.2022
(51) Int. Cl.: H02K 1/14

(54) **MODULAR AUFGEBAUTES, SEGMENTIERTES STATORPAKET**
MODULAR SEGMENTED STATOR ASSEMBLY
PAQUET DE STATOR MODULAIRE, SEGMENTÉ

(30) Priorität: 15.03.2021 DE 102021106186
(43) Veröffentlichungstag der Anmeldung: 21.09.2022
(73) Patentinhaber: ebm-papst Mulfingen GmbH & Co. KGaA & Co. KG, 74673 Mulfingen (DE)
(72) Erfinder: Lust, Alexander, 74182 Obersulm (DE); Weinmann, Ralf, 74582 Gerabronn-Amlishagen (DE); Maschke, Matthias, 74635 Kupferzell (DE); Pollok, Erich, 97996 Niederstetten (DE)
(74) Vertreter: Staeger & Sperling Partnerschaftsgesellschaft mbB

(56) Entgegenhaltungen:
- EP-A1- 1 760 861
- CN-A- 101 258 660
- JP-A- 2001 045 684
- JP-A- 2007 166 754
- JP-A- 2007 181 359
- JP-A- 2011 254 616
- JP-B2- 5 436 671

## Beschreibung

Die Erfindung betrifft ein modular aufgebautes (segmentiertes) Statorpaket, insbesondere eines Elektromotors.

Segementierte Statorpakete sind im Stand der Technik bereits bekannt.

Die EP 2672610 A1 und JP 2011254616 A beschäftigen sich bereits mit segmentierten Statoren und beschreiben darin eines der Teilprobleme, die sich durch die Verbindung von Segment zu Segment eines Stators ergibt. Insbesondere sollten Bewegungen zwischen zwei benachbarten Segmenten möglichst vermieden werden, da solche Bewegungen Vibrationen der Komponenten verursachen, die zu Ermüdung führen und störend sind. Daher ist ein definierter Abstand zwischen Segmenten unabdingbar, um eine ausgeglichene Bewegung des Rotors sicherzustellen.

Eine bekannte Lösung ist die Verbindung der Segmente des Stators oder Rotors durch eine Durchgangsschraube mit einer Mutter. Aufgrund von Toleranzen der einzelnen Segmente können die jeweiligen Segment-zu-Segment-Abstände zwischen den jeweiligen Segmentpaaren variieren. Der Abstand von Segment zu Segment zwischen zwei benachbarten Segmenten wird durch eine Auswahl von Unterlegscheiben kompensiert. Dieses Verfahren ist jedoch ziemlich kompliziert, da der Bediener während der Montage einen vollständigen Satz von Unterlegscheiben in verschiedenen Größen bevorraten muss und dies nicht den Anforderungen an professionelle Herstellung moderner Motoren entspricht.

Daher ist es erforderlich sein, einen segmentierten Stator bereitzustellen, der die Verbindung von Segmenten eines Stators oder eines Rotors in einer effektiven Weise ermöglicht. Darüber hinaus kann ein Verfahren zum Befestigen von Segmenten von einem segmentierten Stator erforderlich sein, bei dem die Segmente auf einfache und kostengünstige Weise zusammengebaut und kalibriert werden können.

Der Erfindung liegt daher die Aufgabe zugrunde, vorbesagte Nachteile im Stand der Technik zu überwinden und ein verbessertes, kostengünstig herstellbares Statorkonzept bereit zu stellen.

Diese Aufgabe wird durch die Merkmalskombination gemäß Patentanspruch 1 gelöst.

Erfindungsgemäß ist vorgesehen, dass der Stator modular aufgebaut ist, aufweisend eine Mehrzahl von Einzelzähnen zur Anbringung von Statorwicklungen, wobei die Einzelzähne in Umlaufrichtung aneinander und/oder an einem zentralen Statorkörper mittels einer jeweiligen Befestigungskontur durch die bevorzugt ein Presstift verläuft, und zwar besonders bevorzugt ein metallischer Stift verläuft, befestigt sind.

Durch den modularen Aufbau des Statorpakets lassen sich die Einzelzähne bzw. lässt sich der Materialverbrauch des benötigten Dynamoblechmaterials minimieren. Die Stanzabfälle lassen sich im Vergleich zu einem einteiligen Stator deutlich reduzieren. Durch eine umweltfreundliche Imprägnierung des kompletten Stators wird die modulare Ausführung zu einer kompakten Einheit, die den schwingungstechnischen und Lebensdauer bestimmenden Anforderungen nachweislich genügt. Der Einzelzahn kann zur Isolation und ggf. Drahtaufnahme mit Kunststoff umspritzt werden.

Erfindungsgemäß ist demnach ein segmentierter Stator ausgebildet aus mehreren Einzelzähnen vorgesehen, die in Umlaufrichtung miteinander verbindbar sind, wobei die Einzelzähne hierzu jeweils einen Verbindungsabschnitt besitzen, um mit zumindest einem jeweils direkt benachbarten Einzelzahn eine mechanische Verbindung herzustellen, wobei der jeweilige Verbindungsabschnitt mindestens auf einer dem unmittelbar benachbarten Einzelzahn zuweisenden Verbindungsseite eine nutförmige Befestigungskontur ausbildet, über die oder an der ein benachbarter Einzelzahn mit seinem Verbindungsabschnitt fixierbar ist.

Besonders vorteilhaft ist eine Ausgestaltung bei der, an den Einzelzähnen jeweils an wenigstens einer Verbindungseite eine sich in Axialrichtung des Stators erstreckende Nut und an einer gegenüberliegenden Seite eine korrespondierend zur Querschnittsform der Nut hervorstehender Koppelsteg vorgesehen ist, der ausgebildet ist in die jeweilige Nut an dem unmittelbar benachbarten Einzelzahn einzugreifen, um diese beiden Einzelzähne aneinander mechanisch zu koppeln oder zu fixieren.

Weiter vorteilhaft ist es, wenn innerhalb der Nut in Axialrichtung verlaufende Nutschlitze vorgesehen sind.

In einer weiteren bevorzugten Ausführungsform der Erfindung ist vorgesehen, dass an den Koppelstegen ein oder mehrere außen in Axialrichtung verlaufende Stege hervorstehen, die korrespondierend in ihrer Gestalt und Position so ausgebildet sind, dass diese beim Eingriff des jeweiligen Koppelstegs in eine korrespondierende Nut in die jeweilige Nutschlitze eingreifen. Besonders bevorzugt ist es, wenn der Koppelsteg eine im Wesentlichen hohlzylindrische Form mit einem innenliegenden Kanal aufweist.

Ebenfalls von Vorteil ist eine Gestaltung bei der der Verbindungsabschnitt einen etwa T-förmigen Querschnitt aufweist mit dem er an einem radial nach außen verlaufenden Zahnsteg eines Einzelzahns befestigt ist und mit seitlichen über den Zahnsteg hervorstehenden Abschnitten ausgebildet ist. Diese Abschnitte können teilkreisförmig gebogen sein.

In einer weiteren bevorzugten Ausführungsform der Erfindung ist vorgesehen, dass ein Nutzschlitz in wenigstens einem der seitlichen über den Zahnsteg hervorstehenden Abschnitt ausgebildet ist.

Weiter bevorzugt ist es, wenn der Koppelsteg als Hohlzylinder mit einer in Axialrichtung verlaufender Zylinderwandung ausgebildet ist, innerhalb derer sich ein Aufnahmeraum (Kanal) befindet sowie einen Spalt die Zylinderwandung in Axialrichtung auftrennt. Dadurch kann die Zylinderwandung aufgebogen werden, insbesondere elastisch aufgebogen werden.

Erfindungsgemäß lässt sich eine Montage realisieren, bei der jeweils zwei miteinander verbundene Einzelzähne jeweils unter Ausbildung eines umlaufenden Fügespalts im Bereich der Befestigungskontur miteinander verbindbar sind. Dadurch lassen sich die Zähne einfach und bequem zusammenschieben. Eine feste Verbindung wird dann mittels Einpressstift realisiert. Mit Vorteil ist hierzu vorgesehen, ferner ein Einpressstift zweier miteinander verbundener Einzelzähne derart in den Aufnahmeraum (Kanal) eingebracht ist, dass es zu einer Presspassung zwischen dem aufgeweiteten Koppelsteg und der entsprechenden Nut in die der Koppelsteg eingeschoben ist, kommt. Dazu muss der Einpressstift entsprechend im Durchmesser geformt sein. Zusätzlich wird durch das Aufweiten der Koppelstege eine kraftschlüssige Verbindung dergestalt bewirkt, dass ein guter magnetischer Fluss gewährleistet ist.

Bevorzugt ist eine Befestigungskontur, die so gestaltet ist, dass durch eine Krafteinwirkung eine formschlüssige Verbindung der Einzelzähne zueinander sicher gestellt wird. Damit kann der Luftspalt zwischen zwei Zähnen minimiert werden, wozu insbesondere plane oder in der Form korrespondierende Anlageflächen der Zähne bereit gestellt werden.

In einer alternativen Ausführungsform der Erfindung ist vorgesehen, dass an den Einzelzähnen jeweils an zwei Verbindungseiten eine sich in Axialrichtung des Stators jeweils erstreckende Nut (z.B. L-förmige Nut) vorgesehen ist und eine entsprechend geeignet geformte Verbindungsklammer vorgesehen ist, die ausgebildet ist, beidseitig in die jeweilige Nut der beiden benachbarten Einzelzähne diese aneinander fixierend einzugreifen, um dadurch diese beiden Einzelzähne miteinander mechanisch zu koppeln.

Bei dieser Ausführungsform ist es weiter vorteilhaft, wenn die Verbindungsklammer als (im Querschnitt) U-förmige Verbindungsklammer mit zwei unter einem schrägen Winkel aufeinander zulaufenden Schenkeln ausgebildet ist, die sich mit den Schenkeln in Axialrichtung in die Nuten zweier benachbarter Einzelzähne unter Ausbildung eines Form- und/oder Kraftschluss einschieben lässt.

Grundsätzlich sind alle offenbarten Merkmale beliebig kombinierbar, soweit dies technisch möglich und sinnvoll ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Teilausschnitt eines segmentierten Stators bestehend aus zwei miteinander verbundener Einzelzähne;
- Fig. 2: eine Detailansicht aus der Fig. 1
- Fig. 3: eine Ansicht eines nicht erfindungsgemäßen, alternativ ausgestalteten Einzelzahns für einen segmentierten Stators zusammen mit zwei Ansichten einer Verbindungsklammer.

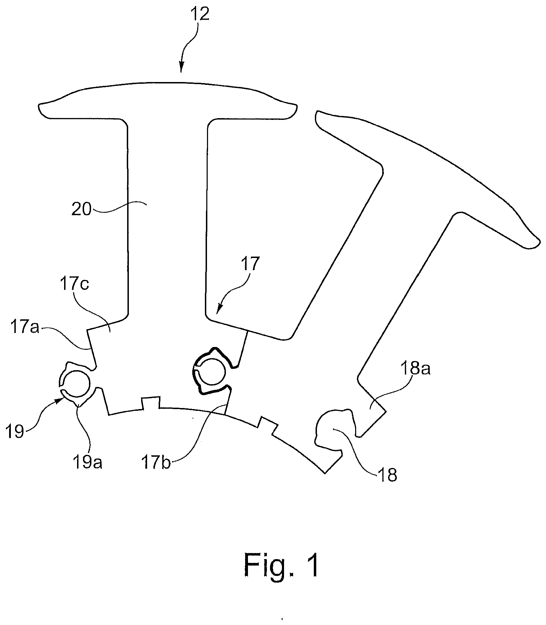

Im Folgenden wird die Erfindung anhand ausgewählter Ausführungsbeispiele mit Bezug auf die Figuren 1 bis 3 näher erläutert, wobei gleiche Bezugszeichen in den Figuren strukturell und/oder funktional gleiche oder gleichartige Teile benennen.

In Figur 1 ist ein erstes Ausführungsbeispiel gezeigt und zwar ein Teilausschnitt eines segmentierten Stators bestehend aus zwei miteinander verbundener Einzelzähne 12 in einer schematischen Draufsicht.

Die beiden Einzelzähnen 12 sind in Umlaufrichtung miteinander verbunden. Erkennbar ist, dass jeder der beiden Einzelzähne 12 jeweils einen Verbindungsabschnitt 17 besitzt, um mit dem jeweils direkt benachbarten Einzelzahn 12 die gezeigte mechanische Verbindung herzustellen, wobei der jeweilige Verbindungsabschnitt 17 hierzu auf der dem unmittelbar benachbarten Einzelzahn 12 zuweisenden Verbindungsseite 17a bzw. 17b eine Befestigungskontur ausbildet, über die der gezeigte benachbarter Einzelzahn mit seinem Verbindungsabschnitt fixiert ist.

An den Einzelzähnen 12 befindet sich jeweils an einer Verbindungseite 17a, 17b eine sich in Axialrichtung des Stators erstreckende Nut 18 und an einer gegenüberliegenden Seite eine korrespondierend zur Querschnittsform der Nut 18 hervorstehender Koppelsteg 19, der hier in die Nut des benachbarten Zahns eingreift.

Innerhalb der Nut 18 befinden sich in Axialrichtung verlaufende Nutschlitze 18a. An den Koppelstegen 19 stehen zwei in Axialrichtung verlaufende Stege 19 entsprechend hervor, die korrespondierend in ihrer Gestalt und Position so ausgebildet sind, dass diese beim Eingriff des jeweiligen Koppelstegs 19, wie in Fig. 1 gezeigt, in die korrespondierenden Nutschlitze 18a eingreifen bzw. hineinragen.

Der Verbindungsabschnitt 17 besitzt einen etwa T-förmigen Querschnitt mit dem er an einem radial nach außen verlaufenden Zahnsteg befestigt ist und mit seitlichen über den Zahnsteg hervorstehenden Abschnitten 17c.

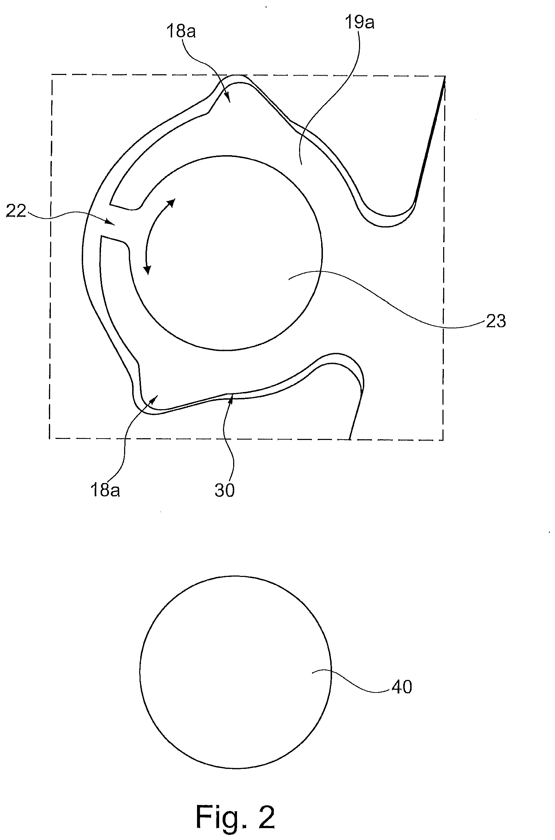

Wie in der schematischen Ansicht der Figur 2 gezeigt, ist der Koppelsteg 19 als Hohlzylinder mit einer in Axialrichtung verlaufender Zylinderwandung 19a ausgebildet. Innerhalb der Wandung 19a befindet sich ein Aufnahmeraum 23 für einen Einpressstift 40. Hierzu sind die Geometrien so aufeinander abgestimmt, dass ein Fügespalt 30 vorhanden ist, der zwischen dem Koppelsteg 19 und der Nut 18 existiert, solange der Einpressstift 40 nicht in den Kanal im Koppelsteg eingepresst wurde.

Ein Einpressstift 40 ist in der Figur 1 nur schematisch angedeutet. Ist dieser in den Aufnahmeraum 23 eingebracht, so kommt es zu einer Presspassung zwischen dem Koppelsteg 19 und der entsprechenden Nut 18 in die der Koppelsteg 19 eingeschoben ist, indem die Wandung 19a aufgebogen wird.

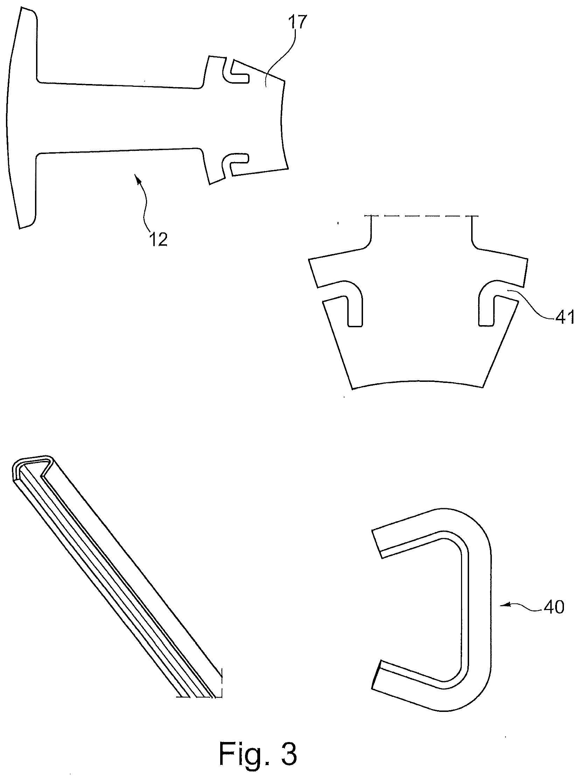

In der Figur 3 ist eine Ansicht eines nicht erfindungsgemäßen, alternativ ausgestalteten Einzelzahns für einen segmentierten Stators zusammen mit zwei Ansichten einer Verbindungsklammer 41 gezeigt. An den Einzelzähnen 12 ist jeweils an zwei Verbindungseiten 17a, 17b hierzu eine sich in Axialrichtung des Stators jeweils erstreckende L-förmige Nut 18 vorgesehen und eine derart geformte Verbindungsklammer 41, die ausgebildet ist, beidseitig in die jeweilige Nut 18 einzugreifen, um die benachbarten Einzelzähne 12 aneinander zu fixieren.

Die Verbindungsklammer 40 ist etwa als U-förmiges Profil ausgebildet mit zwei unter einem schrägen Winkel aufeinander zulaufenden Profil-Schenkeln 42, die sich in Axialrichtung in die Nuten 18 zweier benachbarter Einzelzähne unter Ausbildung eines Form- und/oder Kraftschluss einschieben lassen.

## Patentansprüche

1. Segmentierter Stator ausgebildet aus mehreren Einzelzähnen (12), die in Umlaufrichtung miteinander verbindbar sind, wobei jeder Einzelzahn (12) hierzu jeweils einen Verbindungsabschnitt (17) besitzt, um mit zumindest einem jeweils direkt benachbarten Einzelzahn (12) eine kraftschlüssige mechanische Verbindung herzustellen, wobei der jeweilige Verbindungsabschnitt (17) mindestens auf einer dem unmittelbar benachbarten Einzelzahn (12) zuweisenden Verbindungsseite (17a, 17b) eine nutförmige Befestigungskontur (18, 18a, 19, 19a) ausbildet, über die ein benachbarter Einzelzahn (12) mit seinem Verbindungsabschnitt (17) fixierbar ist und zwar derart, dass eine kraftschlüssige Verbindung erzeugt wird, die einen magnetischen Fluss gewährleistet, **dadurch gekennzeichnet, dass** jeweils zwei miteinander verbundene Einzelzähne (12) unter Ausbildung eines umlaufenden Fügespalts (30) miteinander verbunden oder verbindbar sind.

2. Segmentierter Stator nach Anspruch 1, **dadurch gekennzeichnet, dass** an den Einzelzähnen (12) jeweils an wenigstens einer Verbindungseite (17a, 17b) eine sich in Axialrichtung des Stators erstreckende Nut (18) und an einer gegenüberliegenden Seite eine korrespondierend zur Querschnittsform der Nut (18) hervorstehender Koppelsteg (19) vorgesehen ist, der ausgebildet ist in die jeweilige Nut (18) an dem unmittelbar benachbarten Einzelzahn (12) einzugreifen, um diese beiden Einzelzähne (12) aneinander mechanisch zu koppeln oder zu fixieren.

3. Segmentierter Stator nach Anspruch 2, **dadurch gekennzeichnet, dass** innerhalb der Nut (18) in Axialrichtung verlaufende Nutschlitze (18a) vorgesehen sind.

4. Segmentierter Stator nach Anspruch 2 oder 3, **dadurch gekennzeichnet, dass** an den Koppelstegen (19) ein oder mehrere außen in Axialrichtung verlaufende Stege (19) hervorstehen, die korrespondierend in ihrer Gestalt und Position so ausgebildet sind, dass diese beim Eingriff des jeweiligen Koppelstegs (19) in eine korrespondierende Nut (18) in die jeweilige Nutschlitze (18a) eingreifen.

5. Segmentierter Stator nach einem der vorigen Ansprüche, **dadurch gekennzeichnet, dass** der Verbindungsabschnitt (17) einen T-förmigen Querschnitt aufweist mit dem er an einem radial nach außen verlaufenden Zahnsteg (20) befestigt ist und mit seitlichen über den Zahnsteg hervorstehenden Abschnitten (17c) ausgebildet ist.

6. Segmentierter Stator nach Anspruch 5, **dadurch gekennzeichnet, dass** ein Nutzschlitz (18a) in wenigstens einem der seitlichen über den Zahnsteg (20) hervorstehenden Abschnitt (17c) ausgebildet ist.

7. Segmentierter Stator nach einem der vorigen Ansprüche 2 bis 6, **dadurch gekennzeichnet, dass** der Koppelsteg (19) als Hohlzylinder mit einer in Axialrichtung verlaufender Zylinderwandung (19a) ausgebildet ist, innerhalb derer sich ein Aufnahmeraum (23) befindet sowie einen Spalt (22) die Zylinderwandung in Axialrichtung auftrennt.

8. Segmentierter Stator nach dem vorigen Anspruch 7, **dadurch gekennzeichnet, dass** ferner ein Einpressstift (40) zweier miteinander verbundener Einzelzähne (12) derart in den Aufnahmeraum (23) eingebracht ist, dass es zu einer Presspassung zwischen dem Koppelsteg (19) und der entsprechenden Nut (18) in die der Koppelsteg (19) eingeschoben ist, kommt.

9. Segmentierter Stator nach Anspruch 1, **dadurch gekennzeichnet, dass** an den Einzelzähnen (12) jeweils an zwei Verbindungseiten (17a, 17b) eine sich in Axialrichtung des Stators jeweils erstreckende Nut (18) vorgesehen ist und eine derart geformte Verbindungsklammer (40) vorgesehen ist, die ausgebildet ist, beidseitig in die jeweilige Nut (18) die beiden benachbarten Einzelzähne (12) aneinander fixierend einzugreifen, um dadurch diese beiden Einzelzähne (12) aneinander mechanisch zu koppeln.

10. Segmentierter Stator nach Anspruch 9, **dadurch gekennzeichnet, dass** die Verbindungsklammer (40) als U-förmige Verbindungsklammer mit zwei unter einem schrägen Winkel aufeinander zulaufenden Schenkeln (41) ausgebildet ist, die sich mit den Schenkeln (41) in Axialrichtung in die Nuten (18) zweier benachbarter Einzelzähne (12) unter Ausbildung eines Form- und/oder Kraftschluss einschieben lässt.

## Claims

1. A segmented stator that is composed of a plurality of individual teeth (12) which can be connected to one another in the direction of rotation, each individual tooth (12) having a connecting portion (17) for this purpose in order to produce a nonpositive mechanical connection with at least one directly adjacent individual tooth (12), wherein the respective connecting portion (17) forms a groove-shaped fastening contour (18, 18a, 19, 19a) at least on one connecting side (17a, 17b) facing toward the directly adjacent individual tooth (12), via which fastening contour (18, 18a, 19, 19a) an adjacent individual tooth (12) can be connected to its connecting portion (17), particularly in such a manner that a nonpositive connection is produced which ensures a magnetic flux, **characterized in that** two interconnected individual teeth (12) are respectively interconnected or interconnectable to form a circumferential joint gap (30).

2. The segmented stator according to claim 1, **characterized in that** a slot (18) extending in the axial direction of the stator is provided on at least one connecting side (17a, 17b) of the individual teeth (12), and a coupling web (19) corresponding to the cross-sectional shape of the slot (18) is provided on an opposing side which is designed to engage in the respective slot (18) on the directly adjacent individual tooth (12) in order to mechanically couple or fix these two individual teeth (12) together.

3. The segmented stator according to claim 2, **characterized in that** groove slots (18a) extending in the axial direction are provided within the slot (18).

4. The segmented stator according to claim 2 or 3, **characterized in that**, on the coupling webs (19), one or more webs (19) extend outward in the axial direction and are correspondingly shaped and positioned in such a way that they engage in the respective groove slots (18a) when the respective coupling web (19) engages in a corresponding slot (18).

5. The segmented stator according to any one of the preceding claims, **characterized in that** the connecting portion (17) has a T-shaped cross section with which it is fastened to a radially outwardly extending toothed web (20) and is formed with lateral portions (17c) protruding beyond the toothed web.

6. The segmented stator according to claim 5, **characterized in that** a useful slot (18a) is formed in at least one of the lateral portions (17c) protruding beyond the toothed web (20).

7. The segmented stator according to any one of preceding claims 2 to 6, **characterized in that** the coupling web (19) is embodied as a hollow cylinder with a cylinder wall (19a) which extends in the axial direction and within which there is a receiving space (23) and a gap (22) dividing the cylinder wall in the axial direction.

8. The segmented stator according to preceding claim 7, **characterized in that** a press-fit pin (40) of two interconnected individual teeth (12) is introduced into the receiving space (23) in such a way that a press-fit occurs between the coupling web (19) and the corresponding slot (18) into which the coupling web (19) is inserted.

9. The segmented stator according to claim 1, **characterized in that** the individual teeth (12) are each provided on two respective connecting sides (17a, 17b) with an L-shaped slot (18) that extends respectively in the axial direction of the stator and a commensurately shaped connecting clip (41) that is designed to engage in the respective slot (18) on both sides in order to fix the adjacent individual teeth (12) against one another, thereby mechanically coupling these two individual teeth (12) together.

10. The segmented stator according to claim 9, **characterized in that** the connecting clip (40) is embodied as a U-shaped connecting clip having two legs (41) that extend toward one another at an oblique angle, which U-shaped connecting clip can be inserted with the legs (41) in the axial direction into the slots (18) of two adjacent individual teeth (12) to form a positive and/or nonpositive connection.

## Revendications

1. Stator segmenté formé d'une pluralité de dents individuelles (12) qui peuvent être reliées les unes aux autres dans la direction circonférentielle, chaque dent individuelle (12) comportant une section de liaison (17) afin de réaliser une liaison mécanique par adhérence avec au moins une dent individuelle directement adjacente (12), la section de liaison (17) respective formant au moins un contour de fixation en forme de rainure (18, 18a, 19, 19a) sur un côté de raccordement (17a, 17b) de la dent individuelle (12) immédiatement adjacente, par l'intermédiaire de laquelle une dent individuelle (12) adjacente peut être fixée avec sa section de liaison (17) de telle sorte qu'une liaison par adhérence est produite assurant un flux magnétique, **caractérisé en ce que** deux dents individuelles (12) reliées entre elles sont ou peuvent être reliées l'une à l'autre en formant un espace de jonction circonférentiel (30).

2. Stator segmenté selon la revendication 1, **caractérisé en ce que** les dents individuelles (12) comportent chacune, sur au moins un côté de liaison (17a, 17b), une rainure (18) s'étendant dans la direction axiale du stator et, sur un côté opposé, une nervure d'accouplement (19) faisant saillie conformément à la forme de la section transversale de la rainure (18), qui est conçue pour s'engager dans la rainure (18) respective de la dent individuelle (12) immédiatement adjacente afin de coupler ou de fixer mécaniquement ces deux dents individuelles (12) l'une à l'autre.

3. Stator segmenté selon la revendication 2, **caractérisé en ce que** des fentes (18a) s'étendant dans la direction axiale sont prévues à l'intérieur de la rainure (18).

4. Stator segmenté selon la revendication 2 ou 3, **caractérisé en ce qu'**une ou plusieurs nervures (19) s'étendant vers l'extérieur dans la direction axiale font saillie sur les nervures d'accouplement (19) et sont conçues de manière correspondante dans leur forme et leur position de telle sorte qu'elles s'engagent dans les fentes correspondantes (18a) lorsque la nervure d'accouplement respective (19) s'engage dans une rainure correspondante (18).

5. Stator segmenté selon l'une quelconque des revendications précédentes, **caractérisé en ce que** la section de liaison (17) présente une section transversale en forme de T avec laquelle elle est fixée à une nervure dentée (20) s'étendant radialement vers l'extérieur et est formée avec des sections latérales (17c) dépassant de la nervure dentée.

6. Stator segmenté selon la revendication 5, **caractérisé en ce qu'**une fente utile (18a) est formée dans au moins une des sections latérales (17c) dépassant de la nervure dentée (20).

7. Stator segmenté selon l'une quelconque des revendications précédentes 2 à 6, **caractérisé en ce que** la nervure d'accouplement (19) est réalisée sous la forme d'un cylindre creux avec une paroi cylindrique (19a) s'étendant dans la direction axiale, à l'intérieur de laquelle se trouvent un espace de réception (23) et une fente (22) qui sépare la paroi cylindrique dans la direction axiale.

8. Stator segmenté selon la revendication précédente 7, **caractérisé en ce qu'**une broche d'insertion (40) de deux dents individuelles (12) reliées entre elles est en outre insérée dans l'espace de réception (23) de telle manière qu'un ajustement serré se produit entre la nervure d'accouplement (19) et la rainure correspondante (18) dans laquelle la nervure d'accouplement (19) est insérée.

9. Stator segmenté selon la revendication 1, **caractérisé en ce qu'**une rainure (18) s'étendant dans la direction axiale du stator est prévue sur chacune des dents individuelles (12) au niveau de deux côtés de liaison (17a, 17b) et qu'une pince de liaison (40) est prévue, qui est conçue pour s'engager des deux côtés dans la rainure respective (18) pour fixer les deux dents individuelles adjacentes (12) l'une à l'autre, afin de coupler mécaniquement ces deux dents individuelles (12) l'une à l'autre.

10. Stator segmenté selon la revendication 9, **caractérisé en ce que** la pince de liaison (40) est conçue comme une pince de liaison en forme de U avec deux branches (41) convergeant à un angle oblique, qui peut être insérée avec les branches (41) dans la direction axiale dans les rainures (18) de deux dents individuelles adjacentes (12) en formant une liaison par complémentarité de forme et/ou par adhérence.
